(19) Europäisches Patentamt

European Patent Office

Office européen des brevets

(11) EP 1 273 633 A2

(12) **EUROPEAN PATENT APPLICATION**

(43) Date of publication:
08.01.2003 Bulletin 2003/02

(51) Int Cl.$^7$: C08L 101/02

(21) Application number: 02254417.5

(22) Date of filing: 25.06.2002

(84) Designated Contracting States:
AT BE CH CY DE DK ES FI FR GB GR IE IT LI LU
MC NL PT SE TR
Designated Extension States:
AL LT LV MK RO SI

(30) Priority: 25.06.2001 US 888736

(71) Applicant: Michigan Molecular Institute
Midland, Michigan 48640-2696 (US)

(72) Inventors:
• Dvornic, Petar R.
Midland, Michigan 48640-2425 (US)
• Hu, Jin (NMI)
Midland, Michigan 48642 (US)
• Meier, Dale J.
Midland, Michigan 48640 (US)
• Nowak, Robert M.
Midland, Michigan 48640-6721 (US)

(74) Representative: Copsey, Timothy Graham et al
Kilburn & Strode,
20 Red Lion Street
London WC1R 4PJ (GB)

(54) **Hyperbranched polymer domain networks and methods of making same**

(57) A curable polymer composition capable of achieving rapid curing, reduced viscosity, high solids content, and a very low or zero volatile organic compound content includes a hyperbranched polymer having functional groups of a first type and a polymer having functional groups of a second type, wherein the functional groups of the second type are reactive with the functional groups of the first type under at least certain conditions. The composition can be cured to form a cross-linked nano-domained network comprising covalently bonded nanoscopic, hyperbranched domains which may be of the same or different chemical composition than the rest of the network. The cured compositions may exhibit high thermal stability, mechanical strength and toughness.

## Description

## FIELD OF THE INVENTION

This invention relates to cross-linkable polymer systems and cross-linked polymers. More particularly, the invention relates to cross-linkable compositions comprised of hyperbranched polymers and cross-linked networks prepared from hyperbranched polymers.

## BACKGROUND OF THE INVENTION

Hyperbranched polymers are tree-like macromolecules that possess more extensive chain branching than traditional branched polymers containing mostly primary and secondary branches attached to primarily linear main-chain backbones, but less extensive and regular than perfectly branched dendrimers. In other words, hyperbranched polymers have a molecular architecture that is intermediate between traditional branched polymers and ideally branched dendrimers.

Hyperbranched polymers have attracted considerable attention in recent years, particularly as potential substitutes for the much more expensive but structurally more regular dendrimers. Although there have been few commercially significant applications to date, it has been speculated that hyperbranched polymers could be useful additives for improving the mechanical properties of polymer compositions due to the amorphous character of hyperbranched polymers and their tendency to avoid entanglement. It has also been suggested that hyperbranched polymers may be added to various polymeric compositions (e.g., paints, coatings, adhesives, spinning solutions, film-casting solutions and the like) to provide improved rheological properties and/or to reduce the content of volatile organic components that are often needed to facilitate polymer production and/or processing.

The most examined hyperbranched polymers for such applications have been aliphatic polyesters, which are the only commercially available members of this architectural polymer family (sold as Boltorn® from Perstorp Polyols, Perstorp, Sweden). Utilization of hyperbranched polyesters as tougheners has been examined by Boogh (Boogh, L. et al., Proceedings 10th International Conference on Composite Materials, Whistler, British Columbia, Canada, August 14-18, 1995, Vol. 4, pp. 389-396; 28th International SAMPE Technical Conference, Society for the Advancement of Materials and Process Engineering, Seattle, Washington, November 4-7, 1996, pp. 236-244; SAMPE J., 1997, 33, 45) and Heiden (Heiden P. et al., J. Appl. Polym. Sci., 1999, 71, 1809; 1999, 72, 151). Boogh et al. found that the fracture toughness of carbon fiber-reinforced epoxy composites could be increased by almost 140% by adding only 5% of generation 3 hyperbranched polyester prepared from a tetrafunctional core, without compromising either the glass transition temperature ($T_g$) or the modulus. However, although toughness continued to increase to about 180% when the hyperbranched polyester content was increased to 10%, it was also accompanied with a decrease in $T_g$ and modulus. In contrast to these results, Heiden et al. found only a modest increase in the toughness of epoxy thermoset resins upon addition of different generations of the same hyperbranched polyester (ranging from about 1750 Daltons at generation 2 to almost 14,000 Daltons at generation 5). For example, Heiden et al. found that a 7% loading of generation 5 hyperbranched polyester imparted a 60% increase in the toughness of epoxy thermoset resins, and that a 19% loading of generation 5 hyperbranched polyester imparted an 82% increase in toughness to the epoxy thermoset resins, but that higher loading levels (at and above about 28%) resulted in a decreased toughening effect.

The literature has reported the use of hyperbranched polymers as additives to another material, such as a reinforced polymer composite or polymer matrix. However, the literature has not reported hyperbranched polymers having hydrolyzable functionality and moisture-curable compositions containing same, or curable compositions containing a hyperbranched polymer and at least one other different chemical species that is reactive with the hyperbranched polymer and capable of forming a polymer network with the hyperbranched polymer.

## SUMMARY OF THE INVENTION

The curable polymer compositions of this invention can be formulated to achieve rapid curing, reduced viscosity, high solids content, very low or zero volatile organic compound content, or any combination of these attributes. The curable polymer compositions comprise a hyperbranched polymer having hydrolyzable functional groups, or a hyperbranched polymer having functional groups of the first type that are reactive with functional groups of a second type and at least one other polymer having functional groups of the second type.

The invention also pertains to cross-linked nano-domained networks comprising covalently bonded nanoscopic, hyperbranched domains which may be of the same or different chemical composition than the rest of the network. These nano-domain networks are the reaction product of a curable polymer composition comprising a hyperbranched polymer having hydrolyzable functional groups, or a hyperbranched polymer having functional groups of the first type that are reactive with functional groups of a second type and at least one other polymer having functional groups of the second type. The materials may exhibit high thermal stability, mechanical strength and toughness, and offer new ways for preparing specialty membranes, protective coatings, photoresists, novel composites, controlled porosity materials, etc.

These and other features, advantages and objects of the present invention will be further understood and appreciated by those skilled in the art by reference to the following specification and claims.

## DESCRIPTION OF THE PREFERRED EMBODIMENTS

According to one aspect of the present invention, there is provided a curable composition comprising a hyperbranched polymer having a plurality of functional groups of a first type; and a polymer having functional groups of a second type, wherein the functional groups of the second type are reactive with the functional groups of the first type under at least certain conditions. Preferably, the hyperbranched polymer has a weight average molecular weight from about 1,000 to about 25,000.

Preferably, the polymer having functional groups of the second type is selected from: (i) an alpha, omega-telechelic linear polymer; (ii) a linear polymer with functional groups pendant to the main chain backbone; and (iii) a linear polymer having a polymer backbone with two ends and having functional groups at the two ends and pendant to the backbone. Preferably, the polymer having functional groups of the second type is a branched polymer having a degree of branching less than 20%, preferably less than 5% when of type (ii).

Optionally the polymer having functional groups of the second type is a hyperbranched polymer, a dendron or multi-dendron dendrimer or a combburst dendrigraft.

The hyperbranched polymer preferably has a degree of branching from about 20% to about 45% and the weight average molecular weight from about 2,000 to about 20,000. The hyperbranched polymer is preferably selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

According to a second aspect of the present invention, there is provided the cured reaction product of a hyperbranched polymer having functional groups of a first type, and another polymer having functional groups of a second type, wherein the functional groups of the second type have reacted with the functional groups of the first type to form a polymer network. Preferably the hyperbranched polymer has a weight average molecular weight from about 1,000 to about 25,000.

Preferably the polymer having functional groups of the second type is selected from: (i) an alpha, omega-telechelic linear polymer; (ii) a linear polymer with functional groups pendant to the main chain backbone; and (iii) a linear polymer having a polymer backbone with two ends and having functional groups at the two ends and pendant to the backbone. Preferably the polymer having functional groups of the second type is a branched polymer having a degree of branching less than 20%, more preferably less than 5% when of type (ii).

Optionally the polymer having functional groups of the second type is a hyperbranched polymer, a dendron or multi-dendron dendrimer, or a combburst dendrigraft.

The hyperbranched polymer preferably has a degree of branching from about 20% to about 45% and the weight average molecular weight from about 2,000 to about 20,000. The hyperbranched polymer is preferably selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

According to a third aspect of the present invention, there is provided a moisture-curable composition comprising at least one hyperbranched polymer having a plurality of hydrolyzable functional groups. Preferably the hyperbranched polymer has a weight average molecular weight from about 1,000 to about 25,000. Optionally the hydrolyzable group is selected from an -SiX group wherein X is a halogen atom, -SiOR, -SiOCOR, -SiOCR=CR$_2$ and -SiON=CR$_2$, wherein R is an aliphatic or aryl hydrocarboxyl group.

More preferably the hyperbranched polymer has a degree of branching from about 20% to about 45% and the weight average molecular weight from about 2,000 to about 20,000. The hyperbranched polymer is preferably selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

According to a fourth aspect of the present invention, there is provided the cured reaction product of a hyperbranched polymer having a plurality of hydrolyzable functional groups. Preferably the hyperbranched polymer has a weight average molecular weight from about 1,000 to about 25,000. Optionally the hydrolyzable group is selected from an -SiX group wherein X is a halogen atom, -SiOR, -SiOCOR, -SiOCR=CR$_2$ and -SiON=CR$_2$, wherein R is an aliphatic or aryl hydrocarboxyl group.

The hyperbranched polymer preferably has a degree of branching from about 20% to about 45% and the weight average molecular weight from about 2,000 to about 20,000. The hyperbranched polymer preferably is selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

Nano-domain-structured networks are prepared in accordance with an aspect of this invention by covalently connecting one or more multi-functional hyperbranched polymers with one or more chemical species having a plurality of functional groups that are reactive with the functional groups of the hyperbranched polymers, and are therefore capable of forming polymer networks with the hyperbranched polymer (i.e., cured or cross-linked polymers).

In another aspect of the invention, the nano-domain structured networks are prepared by reacting one or more hyperbranched polymers having hydrolyzable terminal groups (e.g., alkoxylsilyl terminal groups), such as in the presence of moisture (water) to form cured or cross-linked polymer networks.

Dendrimers of a given generation are monodisperse (often having a polydispersity of less than about 1.02), highly defined molecules, having a degree of branching that is 100%, or very nearly 100%. Dendrimers are prepared by a series of controlled stepwise growth reactions which generally involve protect-deprotect strategies and purification procedures at the conclusion of each step. As a consequence, synthesis of dendrimers is a tedious and expensive process that places a practical limitation on their applicability.

As is the case with all dendritic polymers (including dendrimers, hypercomb hyperbranched polymers, and the like) hyperbranched polymers are polymers having branches upon branches. However, in contrast to dendrimers, hyperbranched polymers may be prepared in a one-step, one-pot procedure. This facilitates the synthesis of large quantities of materials, at high yields, and at a relatively low cost. However, the properties of hyperbranched polymer molecules are different from the properties of dendrimers due to imperfect branching and rather large polydispersities, both of which are governed mainly by statistics in the synthesis of hyperbranched polymers. Hyperbranched polymers may be viewed as intermediate between traditional branched polymers and dendrimers. More specifically, a hyperbranched polymer contains a mixture of linear and fully branched repeating units, whereas an ideal dendrimer contains only fully branched repeating units, without any linear repeating units. The degree of branching, which reflects the fraction of branching sites relative to a perfectly branching system (i.e., an ideal dendrimer having a degree of branching equal to unity), for a hyperbranched polymer is greater than zero and less than one, with typical values being from about 25% to 45%. Unlike ideal dendrimers which have a polydispersity near 1, hyperbranched polymers typically have a polydispersity greater than 1.5 for a molecular weight of about 10,000 or higher. These differences between the polydispersities and degrees of branching of hyperbranched polymers and dendrimers are indicative of the relatively higher non-ideality (i.e., randomness and irregularity) of hyperbranched polymers as compared with dendrimers, and distinguishes hyperbranched polymers from dendrimers.

The hyperbranched polymers of this invention may be prepared by any applicable polymerization method, including: (a) mono-molecular polymerization of $AB_2$, $AB_3$, or in general $AB_x$ or $A_x B_y$ monomers, wherein A and B are moieties that are reactive with each other but not with themselves, x and y are integers having a value of at least 2; (b) di-molecular polymerization of $A_2 + B_3$, $A_2 + B_4$, or in general $A_x + B_y$ monomer systems where x is an integer having a value of at least 2, and y is an integer having a value of at least 3; and (c) multi-molecular polymerization reactions of two or more polyfunctional monomers, wherein the average functionality of A or B is at least 2, while the average functionality of the other moiety is higher than 2 (e.g., $A_2 + A_x + B_2$, where x is greater than 2). Other synthetic strategies that may be employed include any of the preceding systems involving more than two types of reacting functional groups, and/or systems involving simultaneous polymerization reactions, such as multi-bond opening or ring opening reactions, step-growth polycondensations or polyadditions, and chain-growth polymerizations, etc. In general, in order to allow synthesis and prevent premature reaction of $AB_x$ and $A_xB_y$ monomers, the A and B groups should be unreactive with each other under one set of conditions, such as at normal ambient conditions, but reactive under another set of conditions, such as in the presence of an initiator, a catalyst, heating or other type of activation.

The degree of branching of the hyperbranched polymers used in this invention is not critical. However, the degree of branching is sufficiently low (e.g., less than 95%, even less than 90%) to distinguish the hyperbranched polymers from dendrimers, which in the ideal case have a degree of branching of 100%. The hyperbranched polymers used in this invention will typically have a degree of branching of from about 20% to about 55%, and more typically from about 25% to about 45%. Such hyperbranched polymers can be easily prepared and are relatively inexpensive as compared with dendrimers.

The hyperbranched polymers used in this invention may generally have a weight average molecular weight from about 1000 to about 25,000; preferably from about 2000 to about 20,000; and more preferably from about 2000 to about 10,000.

The average degree of branching ($\overline{DB}$) has been defined in the literature as the number average fraction of branching groups per molecule, i.e., the ratio of terminal groups plus branched groups to the total number of terminal groups, branched groups, and linear groups. For ideal dendrons and dendrimers the degree of branching is 1. For ideal linear polymers the degree of branching approaches 0. The degree of branching is expressed mathematically as follows:

$$\overline{DB} = \frac{N_t + N_b}{N_t + N_b + N_l}$$

where $N_t$ represents the number of terminal groups, $N_b$ represents the number of branched groups, and $N_l$ represents the number of linear groups, as defined in Hawker, C.J.; Lee, R.; Fréchet, J.M.J., *J. Am. Chem. Soc.,* 1991, 113, 4583.

The hyperbranched polymers that may be used for preparing the curable polymer compositions and cured compositions of this invention include generally any hyperbranched polymer having terminal functional groups that can be reacted with functional groups on another chemical species to form cured or cross-linked polymer networks. Examples include silicon-containing polymers such as hyperbranched polycarbosilanes, polycarbosiloxanes, polycarbosilazenes and copolymers thereof. Examples of silicon-containing hyperbranched polymers are described in U.S. Patent No. 6,384,172, issued May 7, 2002. Other suitable hyperbranched polymers that may be used in this invention include hyperbranched polyureas, polyurethanes, polyamidoamines, polyamides and polyesters. Examples and methods of preparing hyperbranched polyureas, polyurethanes, polyamidoamines, polyamides and polyesters are described in copending U.S. Patent Application No. 09/817,859, filed March 26, 2001. Other examples of well known hyperbranched polymers that may be used in the curable compositions of this invention include hyperbranched polyethers, hyperbranched aliphatic polyesters such as those sold under the name BOLTORN®, hyperbranched poly(ether ketones), hyperbranched polyarylenes and hyperbranched poly(amide-esters) such as those sold under the name HYBRANE®.

Hyperbranched polymers inherently have a high density of terminal functional groups at their outer surface. The type of terminal functional group will depend on the type and relative amounts of monomers or comonomers used to synthesize the hyperbranched polymer, and on any subsequent modification of these groups of the hyperbranched polymer. For example, hyperbranched polyurethanes may contain a high density of terminal hydroxyl functional groups and/or terminal isocyanate groups, depending on which groups are in excess during synthesis of the hyperbranched polymer.

Further, hyperbranched polymers can be chemically modified to provide generally any desired terminal functionality. Examples of terminal functional groups that can be present in a hyperbranched polymer, either as a result of monomer selection during synthesis of the hyperbranched polymer or subsequent modification, include hydroxyl, mercapto, carboxyl, ester, alkoxy, alkenyl, allyl, vinyl, amino, halo, urea, oxiranyl, aziridinyl, oxazolinyl, amidazolinyl, sulfonato, phosphonato, hydrosilyl, isocyanato, isothiocyanato, etc.

In one aspect of the invention, curable compositions can be prepared by combining hyperbranched polymers having functional groups of a first type with linear, lightly branched, hyperbranched or dendritic polymers (including combburst dendrigrafts) having functional groups of a second type that are reactive with the functional groups of the first type, at least under certain conditions. Examples of functionalized linear polymers that may be combined with functionalized hyperbranched polymers to form curable compositions, and ultimately cured or cross-linked polymer networks include alpha,omega-telechelic linear polymers, linear polymers having a plurality of functional groups along the polymer chain (i.e., side or pendant groups), or a combination of both terminal and pendant groups. Similarly, lightly branched polymers (e.g., polymers typically having a degree of branching less than 20% and often less than 5%) may include terminal functional groups, pendant functional groups, or a combination of both terminal and pendant functional groups.

The polymers used for cross-linking the hyperbranched polymers include generally any polymer having terminal groups that will react with the terminal groups on the hyperbranched polymers. Various known chemistries may be used for covalently bonding (cross-linking) the hyperbranched polymers with the cross-linking polymers. The backbone of the cross-linking polymers may or may not be chemically similar to the hyperbranched polymer. The cross-linking polymers may have a weight average molecular weight (MW) from about 1000 to about 500,000, preferably from about 2000 to about 200,000, and more preferably from about 2000 to about 100,000; with the average degree of polymerization (i.e., number of repeat units) being from about 10 to about 10,000, preferably from about 20 to about 2000, and more preferably from about 20 to about 1000.

A cured or cross-linked polymer network may be formed from the curable compositions upon imposition of reactive conditions. Depending on the selection of the hyperbranched polymer and the other polymer or polymers, and other additives, various coating compositions, paints, adhesives, film-casting solutions, and the like may be prepared. Such compositions may be prepared as one-part systems well in advance of their use, or as two-part systems that are combined just prior to their use.

The nano-domain structured networks prepared by reacting hyperbranched polymers having hydrolyzable terminal groups may comprise a single hyperbranched polymer, or a combination of two or more hyperbranched polymers that may be chemically similar or different. Examples of hydrolyzable groups include -SiX groups, wherein X is a halogen atom, and groups having the following formulas:-SiOR, -SiOCOR, -SiOCR=CR$_2$ and -SiON=CR$_2$, wherein R represents an aliphatic hydrocarbon group or an aryl hydrocarbon group. Preferred hydrolyzable groups include chloro, methoxy and ethoxy groups. The hydrolyzable groups may be reacted, such as with water, to cause hydrolysis and condensation of the hydrolyzable groups to form cross-linked networks. Conventional catalysts may be employed to promote rapid curing of the moisture curable compositions.

Depending on the chemistry utilized, initiators, and catalysts may be included in the composition in effective amounts as appropriate. Depending on the type of composition that is being produced, fillers, pigments, dyes, antioxidants, fiber or particulate reinforcing agents, impact modifying agents, UV stabilizers, and other additives and components may be added in effective amounts. In certain applications, it may be desirable to add small amounts of aqueous or organic solvents. However, because of the inherently low viscosity and shear-thinning properties of hyperbranched polymers, solvents, particularly organic solvents, are not required, or may be used in relatively low amounts.

Due to the favorable rheological properties and high density of terminal functional groups at the surface of the hyperbranched polymers, the curable compositions of this invention may be solventless, or contain very low amounts of solvent, and cure rapidly to form nano-domain-structured cross-linked networks that may exhibit improved mechanical properties, such as improved toughness.

Thus, the invention may provide coatings, adhesives, etc. that exhibit enhanced performance characteristics while simultaneously reducing or eliminating adverse effects on the environment.

The curable compositions of this invention may contain one hyperbranched polymer or a combination of two or more different hyperbranched polymers having the same or different chemical structure and having the same or different terminal groups. Similarly, the curable compositions may contain one or more linear or lightly branched polymers having terminal and/or pendant functional groups that are reactive (at least under certain conditions) with functional groups on one or more hyperbranched polymers.

The cured (cross-linked) nano-structured networks of this invention contain nanoscopic domains that may or may not differ in chemical composition. However, their architectural differences result in different relative densities, shapes and sizes. Each of these structural features can be controlled by appropriate selection of precursor moieties and by the reaction conditions employed. In general, the relative density of hyperbranched polymers is higher and their sizes are smaller (typically ranging from about 1 to about 10 nm) than those of their linear counterparts of equivalent molecular weight.

The resulting three-dimensional cross-linked materials comprise covalently bonded nanoscopic, hyperbranched domains which may be of the same or different chemical composition than the linear polymers comprising the rest of the network. These materials may be formed into clear, highly transparent films, sheets, membranes, coatings or other objects, and they may exhibit different glass transition temperatures that may rank them among either elastomers or plastomers. These and other properties of the polymer networks of this invention depend on the selection of particular types and relative amounts of precursor polymers used, including their chemical composition, molecular weight and molecular weight distribution. The materials may also exhibit high thermal stability, mechanical strength and toughness, and offer new ways for preparation of specialty membranes, protective coatings, photoresist, novel composites, control porosity materials, etc. Other promising applications may be found in biomedical areas, material science and engineering, purification of liquids and gases, food processing, storage and packaging, printing and lithography, sensors, catalysis, etc.

The following examples are illustrative of particular embodiments of the invention.

Example 1

Preparation of amine-terminated hyperbranched polyurea

A 500 mL round bottom flask was charged with tris(2-aminoethyl)amine (10.00g, 0.0684mol) and anhydrous THF (150 mL). The flask was flushed with N$_2$ for 2 minutes. The solution was cooled to -78°C, followed by dropwise addition of THF (anhydrous, 20 mL) solution of isophorone diisocyanate (IPDI) (7.60g, 0.0342 mol) with stirring. It was stirred for 2 hours and then allowed to warm up to room temperature. It was further stirred at room temperature for 16 hours. THF solvent was removed by a rotavap to yield a sticky paste. The paste was washed with diethyl ether (2x20 mL), re-dissolved in 200 mL methanol and filtered. The filtrate was evaporated to dryness on rotavap and dried in vacuum for 16 hours. A white solid (12.37) designated as HB-IPDI-(NH$_2$)$_x$ was collected. $^1$H NMR in CD$_3$OD: 0.94 ppm (s); 1.03 ppm(s); 1.05 ppm(s) overlapped with broad and weak multiplet ranging from 0.809 to 1.17 ppm; 1.58 ppm(b, m); 2.53 ppm (t); 2.74 ppm(t); 2.85 ppm (b, s); 3.11 ppm (b, s); 3.17 ppm (b, s); 3.32 ppm (s); 3.8 ppm (b); 6.21 ppm (b). Selected assignments of 'H NMR spectrum: 0.94 ppm (s, CH$_3$); 1.03 ppm (s, CH$_3$); 1.05 ppm (s, CH$_3$); 2.53 ppm (t, [-(C$\underline{H}_2$)$_2$-]); 2.74 ppm (t, [-(C$\underline{H}_2$)$_2$ -]); 3.21 ppm (s, [-(CH$_3$)$_3$C$_6$H$_6$C$\underline{H}_2$NHCONH-]); 6.21 ppm (b and weak, [(-N$\underline{H}$)$_2$ CO]). $^{13}$C{$^1$H} NMR in

CD$_3$OD: 18.66 ppm (s); 24.07-24.55 ppm (m); 28.46 ppm (s); 29.26 ppm (s); 30.14 ppm (s); 30.71 ppm (b, m); 32.70 ppm (s); 32.93 ppm (s); 32.97 ppm (s); 35.96 ppm; 37.76 ppm (m); 39.24 -39.99 ppm (m); 40.97 ppm (s); 41.79 ppm (s); 43.08 ppm(s); 43.60 ppm (s); 44.51 ppm(s); 45.60 ppm(s); 47.06 ppm(s); 47.92 ppm (s); 48.30 ppm (s); 50.63 ppm(s); 52.04 ppm(s); 55.03 ppm (s); 56.10 ppm(s); 56.66 ppm(s); 56.98 ppm(s); 57.07 ppm(s); 57.16 ppm(s); 58.19 ppm(s); 58.38 ppm (s); 160.69 ppm(s); 161.57 ppm(s); 165.90 ppm (s); 166.00 ppm(s). Selected assignments in $^{13}$C {$^1$H} NMR spectrum: 18.66 ppm (s, [O(CH$_2$CH$_3$)$_2$]); 24.07 - 24.55 ppm (m, CH$_3$); 28.46 ppm (s, CH$_3$ ); 29.26 ppm (s, CH$_3$); 30.14 ppm (s, CH$_3$ ); 30.71 ppm (b and m, CH$_3$ ); 35.96 ppm (s, CH$_3$ ); 39.24 -39.99 ppm (m, CH$_2$); 40.97 ppm (s, CH$_2$); 41.79 ppm (s, CH$_2$); 43.08 ppm (s, CH$_2$); 43.60 ppm (s, CH$_2$); 45.60 ppm (s, CH$_2$); 47.06 ppm (s, CH$_2$); 47.92 ppm (s, CH$_2$); 48.30 ppm (s, CH$_2$); 50.63 ppm (s, CH$_2$); 52.04 ppm (s, CH$_2$); 55.03 ppm (s, CH$_2$); 56.10 ppm (s, CH$_2$); 56.66 ppm (s, CH$_2$); 56.98 ppm (s, CH$_2$); 57.07 ppm (s, CH$_2$); 57.16 ppm (s, CH$_2$); 58.19 ppm (s, CH$_2$); 58.38 ppm (s, CH$_2$); 44.51 ppm [s, (CH) in cyclohexyl]; 160.69 ppm [s, (-NHCONH-)]; 161.58 ppm [s, (NHCONH)]; 165.89 ppm [s, (NHCONH)]; 166.00 ppm [s, (NHCONH)]. IR on KBr pellet (selected peaks): 3353 cm$^{-1}$ [broad and strong, $\nu$(-NH$_2$) and $\nu$(-NH-)]; 1643 cm$^{-1}$ [strong , $\nu$ (C=O)]; 1566 cm$^{-1}$ [strong, $\nu$ (CNH) of amide]. MALDI-TOF (matrix: 2,5-Dihydroxybenzonic acid): 12 apparent groups (550.8 m/z, 740.0 m/z, 904.2/z, 1095.5 m/z, 1249.6 m/z, 1429 m/z, 1604.5 m/z, 1785.4 m/z, 1958.4 m/z, 2145.6 m/z, 2321.8 m/z, 2508.0 m/z) within the total range from 500 to 3200 m/z together with some weak groups at two ends of the range. GPC[Column set: Plgel C(2X) (at 80 °C). Solvent: NMP(0.1% LiBr), Detector DRI (50°C), Standards: polystyrene 800-300,000]: Mn 564. Mw 831. Polydispersity 1.44.

## Example 2

Preparation of hyperbranched polyurea having partially siliconized amine end-groups of polymer from Example 1 with mono-(2,3-epoxy)propylether terminated polydimethylsiloxane (MW 5,000)

A 250 mL round flask was charged with HB-IPDI-(NH$_2$)$_x$ (0.50 g), mono-(2,3-epoxy)propylether terminated polydimethylsiloxane CH$_2$OCH CH$_2$OC$_3$H$_6$ (SiMe$_2$O)$_n$ SiMe$_2$Bu$^n$ (MW 5,000, 3.64 g), 10 mL THF and 10 mL methanol. The solution was heated at reflux for 3 days. Volatiles were then removed by a rotavap. The residue was extracted into diethyl ether (100 mL). After diethyl ether was removed on rotavap, a gel-like solid (3.73 g) designated as HB-IPDI-[N(H)$_{2-z}$ (CH$_2$ CH (OH)CH$_2$ OC$_3$ H$_6$(SiMe$_2$O)$_n$SiMe$_2$Bu$^n$)$_z$]$_x$ (O<Z<=2) was obtained. ' $^1$HNMR in CDCl$_3$ : -0.05 ppm (strong s with satellites, [Si(CH$_3$)]; a complex multiplex of various signals between 0.12-3.811 ppm that cannot be precisely assigned. IR on KBr disc (with selected assignments):

3315 cm$^{-1}$ [broad and weak, $\nu$ (NH and NH$_2$)]; 2965 cm$^{-1}$ [strong, $\nu$ (CH$_3$)]; 2905 cm$^{-1}$; 1636 cm$^{-1}$ [weak, $\nu$ (C=O)]; 1568 cm$^{-1}$ [weak, $\nu$ (CNH) of amide]; 1442 cm$^{-1}$; 1412 cm$^{-1}$; 1382 cm$^{-1}$; 1264 cm$^{-1}$ [strong, $\nu$ (Si-CH$_3$)];1094 cm$^{-1}$ [strong, $\nu$ (Si-O-Si)]; 1022 cm$^{-1}$ [strong, $\nu$ (Si-O-Si)]; 866 cm$^{-1}$; 802 cm$^{-1}$; 707-662 cm$^{-1}$.

## Example 3

Curing of hyperbranched polymer of Example 2 with an alpha,omega-telechelic epoxypropoxypropyl terminated polydimethylsiloxane (MW 4.500-5,500)

Hyperbranched polyurea HB-IPDI-[N(H)$_{2-z}$ (NHCH$_2$ CH(OH)CH$_2$ OC$_3$H$_6$(SiMe$_2$ O)$_n$ SiMe$_2$ Bu$^n$)$_z$]$_x$ (O<Z<=2) of Example 1 (0.1000g) and epoxypropoxypropyl terminated polydimethylsiloxanes CH$_2$OCHCH$_2$ OC$_3$H$_6$(SiMe$_2$O)$_n$ SiMe$_2$C$_3$H$_6$OCH$_2$CHOCH$_2$ (MW 4,500-5,500, 0.1750g) were dissolved in 5 mL THF in a 15 mL vial to form a homogenous solution. The solution was evaporated to dryness by blowing N$_2$ at the surface of the solution, and the residue was cured at 110 °C for 1 hour. The obtained solid was washed by THF (2X10 mL) and dried at 110°C for 0. 5 hours to give 0.23 g insoluble solid.

## Example 4

Curing of the hyperbranched polyurea of Example 1 with alpha,omega-telechelic epoxypropoxypropyl terminated polydimethylsiloxanes

Hyperbranched polyurea HB-IPDI-(NH$_2$)$_x$ of Example 1 (0.0102 g) and epoxypropoxypropyl terminated polydimethylsiloxanes CH$_2$OCHCH$_2$OC$_3$H$_6$ (SiMe$_2$O)$_n$ SiMe$_2$C$_3$H$_6$OCH$_2$ CHOCH$_2$ (MW 4,500 -5,500, 0.200 g) were dissolved in 1 mL 2-propanol to form a homogenous solution. The solution was evaporated to dryness by blowing N$_2$ at the surface of the solution. The resulting viscous oil was cast on a Ti-coated PET plate and cured at 110°C for 20 hours to yield an insoluble clear coating.

## Example 5

Preparation of ethoxysilyl-terminated polyurea from the hyperbranched polyurea of Example 1 and 3-isocynatopropyltriethoxysilane

A 500 mL round bottom flask was charged with hyperbranched polyurea HB-IPDI-(NH$_2$)$_x$ of Example 1 (6.00g) and anhydrous THF (60 mL). It was flushed for 1 minute with N$_2$, and 3-isocyantopropyltriethoxysilane (12.00g, 48.51 mmol) was added dropwise. The solution was heated at reflux for 17 hours. The volatiles were then evaporated under reduced pressure to approximate 20 mL remaining volume. 400 mL hexanes were added, and the precipitates settled in about 10 minutes.

The liquid was decanted and the residue was re-dissolved in 100 mL anhydrous THF. 400 mL hexanes was added again; the liquid was decanted and precipitate was dried in vacuum for 16 hours to yield an off white solid (10.64 g), designated HB-IPDI-[Si(OEt)$_3$ ]$_x$. $^1$H NMR in CDCl$_3$ (selected assignments): 0.58 ppm[broad s, (CH$_2$Si)]; 0.88 ppm (broad s); 0.98 ppm (broad s); 1.02 ppm (broad s); 1.18 ppm [t, (OCH$_2$CH$_3$)]; 1.56 ppm (broad s); 2.48 ppm (broad s); 2.76 ppm (broad s); 3.10 ppm (broad s); 3.77 ppm [q, (OCH$_2$CH$_3$)]; 5.77 ppm (broad, [CONH-]); 6.09 ppm (broad, [CONH-]). $^{13}$C{$^1$H} NMR in CDCl$_3$: 7.81 ppm [s, (CH$_2$Si)]; 18.15 ppm [s, (CH$_2$CH$_3$)]; 23.72 ppm [s, (CH$_2$CH$_2$CH$_2$Si)]; 27.72 ppm (s); 31.72 ppm (s); 35.71 ppm (s); 38.50 ppm (s); 42.90 ppm (s, [-CONHCH$_2$ (CH$_2$)$_2$Si]); 46.45 ppm (s); 55.17 ppm (s); 58.35 ppm [s, (OCH$_2$CH$_3$)]; 158.54 - 160.56 ppm [m, (CONH)]. $^{29}$Si{$^1$H} NMR in CDCl$_3$: -44.08 ppm (s, [Si(OEt)$_3$]). IR on KBr pellet (selected assignments): 3330 cm$^{-1}$ ; [strong, ν(NH)]; 2986 cm$^{-1}$ [strong, ν(CH$_3$)]; 2930 cm$^{-1}$; 1642 cm$^{-1}$ [strong, ν(CO)]; 1563 cm$^{-1}$; [strong, ν(CNH) of amide]; 1479 cm$^{-1}$; 1456 cm$^{-1}$; 1391 cm$^{-1}$; 1251 cm$^{-1}$; 1363 cm$^{-1}$; 1297 cm$^{-1}$; 1251 cm$^{-1}$; 1195 cm$^{-1}$; 1167 cm$^{-1}$; 1107 cm$^{-1}$; 1079 cm$^{-1}$; 958 cm$^{-1}$; 888 cm$^{-1}$; 860 cm$^{-1}$; 772 cm$^{-1}$; 647 cm$^{-1}$;. MALDI-TOF (matrix 2,5-trihydroxyacetonphenone): 10 apparent peaks (623.6 m/z, 890.8 m/z, 1271.5 m/z, 1492.9 m/z, 1683.6 m/z, 1866.2 m/z, 2094.1 m/z, 2281.5 m/z, 2693.8 m/z 3292.1 m/z) together with some weak peaks within the total range from 599 to 4000 m/z. GPC [Column set: Plgel C(2X) (at 80 °C). Solvent: NMP(0.1% LiBr). Detector DRI (50°C), Standards: polystyrene 800-300,000]: Mn 2746. Mw 6166. Polydispersity 2.25.

### Example 6

#### Curing of the ethoxysilyl-terminated polyurea of Example 5 with alpha,omegatelechelic silanol terminated polydimethylsiloxane

A 10 mL vial was charged with silanol terminated polydimethylsiloxane HOSiMe$_2$ O(SiMe$_2$O)$_n$ SiM$_2$OH (MW 4200, 1.20 g), THF (0.5 mL) solution of bis(2-ethylhexanoate)tin (95% containing free 2-ethylhexanoic acid) (0.070 g), and 2-propanol (3 mL) solution of hyperbranched polymer HB-IPDI-[Si(OEt)$_3$]$_x$ of Example 5 (0.20 g). The solution was stirred for 48 hours. The solution was then evaporated to dryness by blowing N$_2$ at the surface. The obtained viscous oil was dissolved in 3 mL octane to serve as a coating solution. A 2-propanol solution of HB-IPDI-[Si(OEt)$_3$]$_x$ (0.15 g/mL) containing 2% of bis(2-ethylhexanoate)tin was cast to Ti coated PET plate to form a prime coating. The octane coating solution was then cast onto this prime coating, and cured at 120° for 24 hours to form an insoluble clear coating.

### Example 7

#### Moisture condensation curing ofethoxysilyl-terminated polyurea of Example 5

A 10 mL vial was charged with HB-IPDI-[Si(OEt)$_3$]$_x$ (0.3930 g) of Example 5 and 3 mL 2- propanol. To the resulting solution was added bis(2-ethylhexanoate)Tin (95%; containing free 2-ethylhexanoic acid) (0.0200 g). The solution was poured into a polystyrene weighing dish (Approx i.d. size 1.5"x1", Cat. No.2-202A, Vendor Fish Scientific), allowed to evaporate to dryness in air for 4 hours and cured at 90° for 15 hours. A hard, scratch resistant off-white film was obtained.

### Example 8

#### Preparation of dimethylsilyl-terminated hyperbranched poly(carbo-siloxane) HB-DVTMDS-TDMSS-(SiMe$_2$H)$_x$ from Si(OSiMe$_2$H)$_4$ and (CH$_2$=CHSiMe$_2$)$_2$O

A hyperbranched polycarbosiloxane, designated HB-DVTMDS-TDMSS-(SiMe$_2$H)$_x$, was prepared from Si(OSiMe$_2$H)$_4$ and (CH$_2$=CHSiMe$_2$)$_2$ O (an A$_4$ + B$_2$ system). A 100 mL round bottom flask was charged with Si(OSiMe$_2$H)$_4$ (10.58g, 32.19 mmol) and (CH$_2$=CHSiMe$_2$)$_2$O (4.00g, 21.46 mmol) and anhydrous THF (20 mL). After flushing with N$_2$, 0.0204 g solution of Platinum-divinyltertramethyldisiloxane complex in xylene (Karstedt catalyst) (~2% platinum in xylene) was added. The solution was stirred for 15 minutes at room temperature. It was then heated to reflux for 16 hours. Volatiles were removed by a rotavap. The residue was washed by acetonitrile (5x20 mL) and dried in vacuum for 16 hours to give a slightly yellowish oil (11.64g). $^1$H NMR in CDCl$_3$:0.043 ppm to 0.211 ppm (m, [Si(CH$_3$)]); 0.46 ppm (s, [-(CH$_2$)$_2$ -]); 0.51 ppm (s, [-(CH$_2$)$_2$ -]); 1.04 ppm [d,(CH$_3$CH)]; 4.73 ppm [broad, (SiH)]. $^{13}$C{$^1$H} NMR in CDCl$_3$: -1.22 ppm to 1.19 ppm (m, [Si(CH$_3$)$_2$ ]); 9.37 ppm to 9.72 ppm (m, [-(CH$_2$)$_2$-]). $^{29}$Si {$^1$H} NMR in CDCl$_3$ :-108.73 ppm to -107.13 ppm (m, [Si(O-)$_4$ ]); -24.46 ppm (broad, [(-O)Si(CH$_3$)$_2$(O-)]); -10.49 ppm to -8.20 ppm [m, (SiH)]; 3.94 ppm to 7.03 ppm (m, [(-CH$_2$ CH$_2$)Si(CH$_3$)$_2$(O-)]). Integral ([Si(O-)$_4$] : [(-CH$_2$ CH$_2$)Si(CH$_3$)$_2$(O-)] [SiH] : [(-O)Si(CH$_3$)$_2$(O-)] 1 : 3.46 : 2.33 : 0.22. IR on KBr disc (selected assignments): ν (Si-H) 2133 cm$^{-1}$. GPC [Column set: Plgel C(2 columns), PLgel 100A, Plget 50 A. Solvent: toluene. Standards: polystyrene 800-300,000]: Mn 1350; Mw 2913; Polydispersity 2.16. $^1$H NMR spectra showed the presence of trace amount of (CH$_3$CH) group, indicating trace amount of alpha addition product. $^{29}$Si {$^1$H} NMR spectra showed the presence of trace amounts of (-O)Si(CH$_3$)$_2$(O-) moiety, which may be due to dehydrogenation in the presence of trace amount of water.

## Example 9

Curing of HB-DVTMDS-TDMSS-(SiMe$_2$H)$_x$ polymer of Example 8 with α,ω-telechelic vinyl-terminated polydimethylsiloxane

CH$_2$=CHSiMe$_2$O(SiMe$_2$O)$_n$  SiMe$_2$CH=CH$_2$ (MW 62,700, 1.20 g) was dissolved in 2 mL hexanes in a 15 mL vial. To this solution was added: 0.1 mL hexanes solution of 3-methyl-1-pentyn-3-ol (0.30g/mL); 0.1 mL hexanes solution of Platinum-divinyltertramethyldisiloxane complex in xylene (Karsteadt catalyst) (∼2% platinum in xylene) (0.20g xylene solution in 1 mL hexanes); HB-DVTMDS-TDMSS-(SiMe$_2$H)$_x$ (0.30 g) in 1.5 mL THF; and 0.1 mL THF solution of (3-glycidoxypropyl) trimethoxysilane (0.25 g/mL). The resulting solution was cast on a Ti coated PET plate, cured for 20 minutes at 120°C to yield an insoluble clear coating.

## Example 10

Preparation of dimethylsilyl-terminated hyperbranched poly(carbo-siloxane) HB-DVTMDS-MTDMSS-(SiMe$_2$H)$_x$ from MeSi (OSiMe$_2$H)$_3$ and (CH$_2$=CHSiMe$_2$)$_2$O

A dimethylsilyl-terminated hyperbranched polycarbosiloxane, designated HB-DVTMDS-MTDMSS-(SiMe$_2$H)$_x$ was prepared from MeSi (OSiMe$_2$H)$_3$ and (CH$_2$=CHSiMe$_2$)$_2$O (an A$_3$+B$_2$ system). A 100 mL round bottom flask was charged with MeSi(OSiMe$_2$H)$_3$ (9.22 g, 34.32 mmol), (CH$_2$=CHSiMe$_2$)$_2$O (400 g, 21.46 mmol) and anhydrous THF (20 mL). After flushing with N$_2$ 0.0130 g solution of Platinum-divinyltertramethyldisiloxane complex in xylene (Karstedt catalyst) (∼2% platinum in xylene) was added. The solution was stirred for 15 minutes at room temperature, and then heated at reflux for 20 hours. Volatiles were removed by a rotavap. The residue was washed with acetonitrile (5x20 mL) and dried in vacuum for 16 hours to give a slightly yellowish oil (8.78g). $^1$H NMR in CDCl$_3$ : 0.011 ppm to 0.039 ppm (m, [(CH$_3$)$_2$ Si]); 0.076 ppm (s, [(CH$_3$)Si(O-)$_3$]) and 0.080 ppm (s, [(CH$_3$)Si(O-)$_3$]); 0.192 ppm (d, [(CH$_3$)SiH]); 0.502 ppm (s, [-(CH$_2$)$_2$-]); 0.440 ppm (s, [-(CH$_2$)$_2$-]); 1.03 ppm [d, (CH$_3$CH)]; 4.72 ppm [septet, (SiH)]. $^{13}$C{$^1$H} NMR in CDCl$_3$:-2.75 to 1.19 ppm [m, (CH$_3$)]; 9.51 to 9.78 ppm (m, [-(CH$_2$)$_2$-]). $^{29}$Si{$^1$H} NMR in CDCl$_3$: -63.87 ppm to -61.85 ppm (m, [(CH$_3$Si(O-)$_3$]); -20.83 to 19.06 ppm (m, [(-O)Si(CH$_3$)$_2$ (O-)]); -6.28 ppm to -5.29 ppm [m, (SiH)]; 8.72 ppm to 10.25 ppm (m, [(-CH$_2$CH$_2$)Si(CH$_3$)$_2$ (O-)]). Integral {[(CH$_3$)Si(O-)$_3$]:[(-CH$_2$CH$_2$)Si(CH$_3$)$_2$(O-)]: [SiH]: [-O)Si(CH$_3$)$_2$(O-)]} 1: 3.22 : 1.46: 0.18. IR on KBr disc (selected resonance): 2130 cm$^{-1}$ [ν(Si-H)]. GPC [Column set: Plgel C(2 columns), PLgel 100A, Plgel 50 A. Solvent: toluene. Standards: polystyrene 800-300,000]: Mn 955. Mw 2924. Polydispersity 3.059. $^1$H NMR spectra showed the presence of trace amounts of (CH$_3$CH) group, indicating trace amounts of alpha addition product. $^{29}$Si {$^1$H} NMR spectra showed the presence of trace amounts (-O)Si(CH$_3$)$_2$ (O-) moiety, which may be due to dehydrogenation in the presence of trace amounts of water.

## Example 11

Curing of HB-DVTMDS-MTDMSS-(SiMe$_2$H)$_x$ polymer of Example 10 with α,ω-telechelic vinyl-terminated polydimethylsiloxane

CH$_2$=CHSiMe$_2$O(SiMe$_2$O)$_n$ SiMe$_2$CH=CH$_2$ (MW 62,700, 1.00g) was dissolved in 1.5 mL octane in a 15 mL vial. To this solution was added: two drops of 3-methyl-1-pentyn-3-ol; two drops of solution of Platinum-divinyltertramethyldisiloxane complex in xylene (Karstedt catalyst) (∼2% platinum in xylene); HB-DVTMDS-MTDMSS-(SiMe$_2$H)$_x$ (0.25 g); and 2 drops of (3-glycidoxypropyl)trimethoxysilane. The resulting solution was cast on a Ti coated PET plate, cured for 12 hours at 120°C to yield an insoluble clear coating.

## Example 12

Preparation of dimethylsilyl-terminated hyperbranched poly(carbo-siloxane) HB-DVTPHDS-TDMSS-(SiMe$_2$H)$_x$ from Si(OSiMe$_2$H)$_4$ and (CH$_2$=CHSiPh$_2$)$_2$O

A dimethylsilyl-terminated hyperbranched polycarbosiloxane, designated HB-DVTPHDS-TDMSS-(SiMe$_2$H)$_x$, was prepared from Si(OSiMe$_2$H)$_4$ and (CH$_2$=CHSiPh$_2$)$_2$O(an A$_4$+B$_2$ system). A 100 mL round bottom flask was charged with Si(OSiMe$_2$H)$_4$ (2.34 g, 7.13 mmol), (CH$_2$=CHSiPh$_2$)$_2$O (2.11 g, 4.60 mmol) and anhydrous THF (10 mL). After flushing with N$_2$, 0.010 g solution of Platinum-divinyltertramethyldisiloxane complex in xylene (Karstedt catalyst) (∼2% platinum in xylene) was added. The solution was stirred for 2 minutes at room temperature, and then heated at reflux for 15 hours. Volatiles were removed on a rotavap, and the residue was washed by acetonitrile (5X20 mL) and dried in vacuum for 24 hours to give a slightly yellowish viscous oil (1.52g). $^1$H NMR in CDCl$_3$: 0.24 to 0.40 ppm m, [Si(CH$_3$)]); 0.60 to 0.69 ppm (broad and m, [-(CH$_2$)$_2$-]); 0.75 to 0.85 ppm (broad and m, [-(CH)$_2$-]); 1.05 to 1.21 ppm [broad and m, unidentified]; 1.34 to 1.44 ppm [broad and m, unidentified]; 4.80 to 4.95 ppm [m, (SiH)]; 7.41 to 7.50 [m, (C$_6$H$_5$)]; 7.67 to 7.79 ppm [m, (C$_6$H$_5$)]. $^{13}$C{$^1$H} NMR in CDCl$_3$: -1.23 to 0.94 ppm (m, [Si(CH$_3$)]); 6.95 ppm (s, [-(CH$_2$)$_2$-]; 7.08 ppm (shoulder, [-(CH$_2$)$_2$-]); 7.42 ppm (broad, [-(CH$_2$)$_2$-]); 9.20 ppm (s, [-(CH$_2$)$_2$-]); 9.34 ppm (shoulder, [-(CH$_2$)$_2$-]); 9.67 ppm (broad, [-(CH$_2$)$_2$-]); 77.11 to 77.96 [weak m overlaps with CDCl$_3$, unidentified]; 127.68 to 128.21 ppm [m, (C$_6$H$_5$)]; 129.52 to 129.99 ppm [m, (C$_6$H$_5$)]; 134.37 to 135.04 ppm [m, (C$_6$H$_5$)]; 136.47 to 137.00 ppm [m,

$(C_6H_5)]$. $^{29}Si\{^1H\}$ NMR in $CDCl_3$: - 103.43 to -101.83 ppm (m, $[Si(O-)_4]$); - 19.15 ppm (s, $[(-O)Si(CH_3)_2(O-)]$); -8.23 ppm [m, $(Ph_2 Si)$]; -4.03 to -3.19 ppm [s, (SiH)]; 11.06 to to 12.30 ppm (m, $[(-CH_2CH_2)Si(CH_3)_2(O-)]$). Integral $\{[Si(O-)_4]: [(-CH_2CH_2)Si(CH_3)_2(O-)]: [Ph_2Si] : [SiH] : [(-O)Si(CH_3)_2(O-)]\}$ 1:2.56 : 2.71 : 2.29 : 0.41. IR on KBr disc (selected resonance): 2131 $cm^{-1}$ [$\nu$(SiH)]. GPC (Column set: Plgel C(2 columns), PLgel 100 A, Plgel 50 A. Solvent: toulene. Standards: polystyrene 800-300,000): Mn 1432. Mw 2960. Polydispersity 2.07. $^{29}Si\{^1H\}$ NMR spectra showed the presence of trace amounts $(-O)Si(CH_3)_2(O-)$ moiety, which may be due to dehydrogenation in the presence of trace amounts of water.

Example 13

Curing of HB-DVTPHDS-TDMSS-$(SiMe_2H)_x$ polymer of Example 12 with $\alpha,\omega$-telechelic vinyl-terminated polydimethylsiloxane

$CH_2=CHSiMe_2O(SiMe_2O)_nSiMe_2CH=CH_2$ (MW 62,700, 1.20g), was dissolved in 2 mL hexanes in a 15 mL vial. To this solution was added: 0.1 mL hexanes solution of 3-methyl-1-pentyn-3-ol(0.30g/mL); 0.1 mL hexane solution of Platinum-divinyltertramethyldisiloxane complex in xylene (Karstedt catalyst) ($\sim$2% platinum in xylene) (0.20g xylene solution in 1 mL hexanes); HB-DVTPHDS-TDMSS-$(SiMe_2 H)$ (0.30 g) in 1.5 THF; and 0.1 mL THF solution of (3-glycidoxypropyl)trimethoxysilane (0.25 g/mL). The resulting solution was cast on a Ti coated PET plate, cured for 20 minutes at 120°C to yield insoluble clear coating.

Example 14

Preparation of dimethylsilyl-terminated hyperbranched poly(carbo-siloxane) HB-DVDPHDMDS-TDMSS-$(SiMe_2H)_x$ from Si $(OSiMe_2H)_4$ and $(CH_2=CHSiPhMe)_2 O$

A dimethylsilyl-terminated hyperbranched polycarbosiloxane, having the designation HB-DVDPH-DMDS-TDMSS-$(SiMe_2H)_x$, was prepared from Si $(OSiMe_2H)_4$ and $(CH_2=CHSiPhMe)_2$ O (an $A_4 + B_2$ system). A 100 mL round bottom flask was charged with Si $(OSiMe_2H)_4$ (3.28 g, 9.98 mmol), $(CH_2=CHSiPhMe)_2$ O (2.00g, 6.44 mmol) and anhydrous THF (10 mL). After flushing with $N_2$, 0.010 g solution of Platinum-divinyltertramethyldisiloxane completx in xylene (Karstedt catalyst) (about 2% platinum in xylene) was added. The solution was stirred for 2 minutes at room temperature, and then heated at reflux for 15 hours. Volatiles were removed on a rotavap, and the residue was washed by acetonitrile (5X20 mL) and dried in vacuum for 24 hours to give a slightly yellowish viscous oil (2.25g). $^1H$ NMR in $CDCl_3$: 0.03 to 0.29 ppm (m, $[Si(CH_3)]$); 0.40 to 0.98 ppm (m, $[-(CH_2)_2-]$); 4.81 ppm [septet, (SiH)]; 7.43 ppm

[b, $(C_6H_5)$]; 7.62 ppm [b, $(C_6H_5)$]. $^{13}C\{^1H\}$ NMR in $CDCl_3$ : -1.71 to 0.79 ppm (m with a strong peaks at 0.40 ppm, $[Si(CH_3)]$); 0.79 to 9.46 ppm (m with two strong peaks at 8.55 ppm(s) and 9.46 ppm(s), $[-(CH_2-)_2-]$); 127.64 ppm [s with a shoulder 127.51 ppm, $(C_6H_5)$]; 129.18 ppm [s, $(C_6H_5)$]; 133.38 ppm [s with a shoulder 133.26 ppm, $(C_6H_5)$]; 138.73 ppm [s, $(C_6H_5)$]; 139.09 ppm [s, $(C_6H_5)$]. $^{29}Si\{^1H\}$ NMR in $CDCl_3$: -108.88 to -103.39 ppm (m, $[Si(O-)_4]$); -24.57 ppm (broad, $[(-O)Si (CH_3)_2(O-)]$); -9.60 to -8.73 ppm [m, (SiH)]; -4.54 ppm [s with a shoulder-4.31 ppm, (SiPhMe)]; -5.17 ppm [s, (SiPhMe)]; 5.57 to 6.80 ppm (m, $[(-CH_2CH_2) Si(CH_3)_2 (O-)]$). Integral $\{[Si(O-)_4]:[(-CH_2CH_2)Si(CH_3)_2(O-)]: [SiPhMe] : [SiH] : [(-O)Si(CH_3)_2 (O-)]\}$ 1 : 1.90 : 2.80 : 2.37 : 0.22. IR on KBr disc (selected assignment): 2131 $cm^{-1}$ [$\nu$(SiH)]. GPC [Column set: Plgel C (2 columns), PLgel 100A, Plgel 50 A. Solvent: toluene. Standards: polystyrene 800-300,000]: Mn 605. Mw 2644. Polydispersity 4.37. $^{29}Si\{^1H\}$ NMR spectra showed the presence of trace amounts $(-O)Si(CH_3)_2(O-)$ moiety, which may be due to dehydrogenation in the presence of trace amounts of water.

Example 15

Curing of HB-DVDPHDMDS-TDMSS-$(SiMe_2H)_x$ polymer of Example 14 with $\alpha,\omega$ -telechelic vinyl-terminated polydimethylsiloxane

$CH_2 =CHSiMe_2 O(SiMe_2O)_n SiMe_2CH=CH_2$ (MW 62,700, 0.60g) was dissolved in 1 mL hexanes in a 15 mL vial. To this solution was added: 0.05 mL hexanes solution of 3-methyl-1-pentyn-3-ol (0.30g/mL); 0.05 mL hexanes solution of Platinum-divinyltertramethyldisiloxane complex in xylene (Karstedt catalyst) (about 2% platinum in xylene)(0.20g xylene solution in 1 mL hexanes); HB-DVDPHDMDS-TDMSS-$(SiMe_2H)_x$ (0.15 g) in 0.75 mL THF; and 0.05 mL THF solution of (3-glycidoxypropyl)trimethoxysilane (0.25 g/mL). The resulting solution was cast on a Ti coated PET plate and cured for 20 minutes at 120°C to yield an insoluble clear coating.

Example 16

Preparation of dimethylvinylsilyl-terminated hyperbranched poly(carbo-siloxane) HB-DVTMDS-TDMSS-$(SiMe_2 Vi)_x$ from $Si(OSiMe_2H)_4$ and $(CH_2=CHSiMe_2)_2O$

A dimethylvinylsilyl-terminated hyperbranched polycarbosiloxane, designated HB-DVTMDS-TDMSS-$(SiMe_2Vi)_x$, was prepared from $Si(OSiMe_2H)_4$ and $(CH_2=CHSiMe_2)_2$ O (an $A_4 +$ excess $B_2$ system). A 100 mL bottom flask was charged with $Si(OSiMe_2H)_4$(3.00g, 9.13 mmol), $(CH_2=CHSiMe_2)_2$ O (10.55 g, 56.69 mmol) and anhydrous THF (20 mL). After flushing with $N_2$ 0.0200 g solution of Platinum-divinyltertramethyldisiloxane complex in xylene (Karstedt catalyst) (about 2% platinum in xylene) was added. This solution was stirred for 15 minutes at room temperature, and then heated at reflux for 20.5 hours. Volatiles were removed on a rotavap, and the residue was washed by acetonitrile (4X40 mL) and dried in vacuum for 3 days to give a slightly yellowish oil (6.76g). $^1$H NMR in CDCl$_3$: 0.051 ppm (s, [SiCH$_3$)]); 0.064 ppm (s, [Si(CH$_3$)]); 0.089 ppm (s, [Si(CH$_3$)]); 0.139 ppm (s, Si(CH$_3$)]); 0.46 ppm (s, [-(CH$_2$)$_2$ -]); 0.52 ppm (s, [-(CH$_2$)$_2$-]); 1.00 ppm [d, (CH$_3$CH)]; 1.059 ppm [d, (CH$_3$CH)]; 1.066 ppm [d, (CH$_3$CH)]; 5.72 ppm (dd, CH$_2$=CHSi); 5.92 ppm (dd, CH$_2$=CHSi); 6.18 ppm (dd, CH$_2$ =CHSi). $^{13}$C {$^1$H} NMR in CDCl$_3$: -0.70 ppm (s, [Si(CH$_3$)]); -0.42 ppm (s, [Si (CH$_3$)]); -0.30 ppm (s, [Si(CH$_3$)]); -0.14 ppm (s, [Si (CH$_3$)]); 9.41 ppm to 9.82 ppm (m, [-(CH$_2$)$_2$-]); 131.43 ppm [s, (CH$_2$=CHSi)]; 139.76 [s, (CH$_2$ =CHSi). $^{29}$Si{$^1$H} NMR in CDCl$_3$:-105.67 to -104.78 ppm [m, Si(O-)$_4$ ]; -4.8 ppm [s, (CH$_2$ =CHSi)]; 6.97 ppm (s, [-(CH$_2$CH$_2$)Si(CH$_3$)$_2$ (O-)]); 7.55 ppm (s, [-(CH$_2$CH$_2$)Si(CH$_3$)$_2$(O-)]); 8.77 ppm (s with satellites from 8.28 to 9.26 ppm, [-(CH$_2$CH$_2$)Si (CH$_3$)$_2$(O-)]). Integral {[Si(O-)$_4$]: [(-CH$_2$CH$_2$)Si(CH$_3$)$_2$ (O-)]: [CH$_2$ =CHSi]]} 1 : 8.78 : 1.58. IR on KBr disc (selected assignments): 1995 cm$^{-1}$ [$v$ (C=C)]; 1563 cm$^{-1}$ [$v$ (C=C)]. GPC [Column set: Plgel C(2 columns), PLgel 100A, Plgel 50 A. Solvent: toluene. Standards: polystyrene 800-300,000]: Mn 1397; Mw 9061; Polydispersity 6.49.

## Example 17

Curing of HB-DVTMDS-TDMSS-(SiMe$_2$H)$_x$ polymer of Example 8 with α,ω-telechelic vinyl-terminated polydimethylsiloxane and HB-DVTMDS-TDMSS-(SiMe$_2$ Vi)$_x$ polymer of Example 16

CH$_2$=CHSiMe$_2$O(SiMe$_2$O)$_n$ SiMe$_2$CH=CH$_2$ (MW 62,700, 1.20g) and HB-DVTMDS-TDMSS-(SiMe$_2$Vi)$_x$(0.10g) was dissolved in 2 mL hexanes in a 15 mL vial. To this solution was added: 0.15 mL hexanes solution of 3-methyl-1-pentyn-3-ol (0.30g/mL); 0.1 mL hexanes solution of Platinum-divinyltetramethyldisiloxane complex in xylene (Karstedt catalyst) (~2% platinum in xylene) (0.20g xylene solution in 1 mL hexanes); HB-DVTMDS-TDMSS-(SiMe$_2$ H)$_x$ (0.30 g) in 1.5 mL THF; and 0.1 mL THF solution of (3-glycidoxypropyl)trimethoxysilane (0.25 g/mL). The mixture was stirred on each step of addition. The resulting solution was cast on a Ti coated PET plate and cured for 20 minutes at 120°C to yield an insoluble clear coating.

## Example 18

Curing of HB-DVTMDS-TDMSS-(SiMe$_2$H)$_x$ polymer of Example 8 with HB-DVTMDS-TDMSS-(SiMe$_2$Vi$_x$ polymer of Example 16

HB-DVTMDS-TDMSS-(SiMe$_2$Vi)$_x$ of Example 16 (0.60 g) was dissolved in 1 mL hexanes in a 15 mL vial. To the solution was added: 0.1 mL hexanes solution of 3-methyl-1-pentyn-3-ol(0.30g/mL); 0.1 mL hexanes solution of Platinum-divinyltetramethyldisiloxane complex in xylene (Karstedt catalyst) (~2% platinum in xylene) (0.2g xylene solution in 1 mL hexanes), HB-DVT-MDS-TDMSS-(SiMe$_2$H)$_x$ of Example 8 (0.60g) in 0.5 mL THF; and 0.1 mL THF solution of (3-glycidoxypropyl)trimethoxsilane (0.25 g/mL). The resulting solution was cast on a Ti coated PET plate, cured for 20 minutes at 120°C to yield insoluble clear, hard and brittle coating.

## Example 19

Curing of HB-DVTPHDS-TDMSS-(SiMe$_2$ H)$_x$ polymer of Example 12 with Vinylmethylsiloxane-Dimethylsiloxane copolymers

0.010g Trimethylsiloxy-terminated Vinylmethylsiloxane-Dimethylsiloxane copolymers (Vendor Gelest, Code VDT-731, vinylmethylsiloxane 7.0-8.0 Mole%, Viscosity 800-1200 cSt) was dissolved in 2 mL Octane. To the solution was added: 0.010g 3-methyl-1-pentyn-3-ol and 0.010g Platinum - divinyltertramethyldisiloxane complex in xylene (Karstedt catalyst) (~2% platinum in xylene). The resulting solution was well agitated. After HB-DVTPHDS-TDMSS-(SiMe$_2$H)$_x$(0.10g) of Example 12 was added, the solution was cast onto a Ti coated PET plate, cured for 10 minutes at 120°C to yield an insoluble clear coating.

The above description is considered that of the preferred embodiments only. Modifications of the invention will occur to those skilled in the art and to those who make or use the invention. Therefore, it is understood that the embodiments described above are merely for illustrative purposes and are not intended to limit the scope of the invention, which is defined by the following claims as interpreted according to the principles of patent law, including the doctrine of equivalents.

## Claims

1. A curable composition comprising:

   a hyperbranched polymer having a plurality of functional groups of a first type; and
   a polymer having functional groups of a second type, wherein the functional groups of the second type are reactive with the functional groups of the first type under at least certain conditions.

**2.** A composition as claimed in claim 1, **characterised in that** the hyperbranched polymer has a weight average molecular weight from about 1,000 to about 25,000.

**3.** A composition as claimed in claim 1, **characterised in that** the polymer having functional groups of the second type is selected from: (i) an alpha,omega-telechelic linear polymer; (ii) a linear polymer with functional groups pendant to the main chain backbone; or (iii) a linear polymer having a polymer backbone with two ends and having functional groups at the two ends and pendant to the backbone.

**4.** A composition as claimed in any preceding claim, **characterised in that** the polymer having functional groups of the second type is a branched polymer having a degree of branching less than 20%.

**5.** A composition as claimed in claim 3, **characterised in that** branched polymer has a degree of branching less than 5% when the polymer is of type (ii).

**6.** A composition as claimed in claim 1 or claim 2, **characterised in that** the polymer having functional groups of the second type is: (iv) a hyperbranched polymer, (v) a dendron or multi-dendron dendrimer, or (vi) a combburst dendrigraft.

**7.** A composition as claimed in any preceding claim, **characterised in that** the hyperbranched polymer has a degree of branching from about 20% to about 45% and a weight average molecular weight from about 2,000 to about 20,000.

**8.** A composition as claimed in any preceding claim, **characterised in that** the hyperbranched polymer is selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

**9.** The cured reaction product of a hyperbranched polymer having functional groups of a first type, and another polymer having functional groups of a second type, wherein the functional groups of the second type have reacted with the functional groups of the first type to form a polymer network.

**10.** The cured reaction product of claim 9, **characterised in that** the product is the cured reaction product of the curable composition of any one of claims 1 to 8.

**11.** A moisture-curable composition comprising at least one hyperbranched polymer having a plurality of hydrolyzable functional groups.

**12.** A composition as claimed in claim 11, **characterised in that** the hyperbranched polymer has a weight average molecular weight from about 1,000 to about 25,000.

**13.** A composition as claimed in claim 11 or claim 12, **characterised in that** the hydrolyzable group is selected from an -SiX group wherein X is a halogen atom, -SiOR, -SiOCOR, -SiOCR=CR$_2$ and -SiON=CR$_2$, wherein R is an aliphatic or aryl hydrocarboxyl group.

**14.** A composition as claimed in any one of claims 11 to 13, **characterised in that** the hyperbranched polymer has a degree of branching from about 20% to about 45% and the weight average molecular weight from about 2,000 to about 20,000.

**15.** A composition as claimed in any one of claims 11 to 14, **characterised in that** the hyperbranched polymer is selected from the group consisting of hyperbranched polyureas, hyperbranched polyurethanes, hyperbranched polyamidoamines, hyperbranched polyamides, hyperbranched polyesters, hyperbranched polycarbosilanes, hyperbranched polycarbosiloxanes, hyperbranched polycarosilazenes, hyperbranched polyethers, hyperbranched poly(ether ketones), hyperbranched poly(propyleneimine), hyperbranched polyalkylamines, or copolymers thereof.

**16.** The cured reaction product of a hyperbranched polymer having a plurality of hydrolyzable functional groups.

**17.** The cured product of claim 16, **characterised in that** the product is the cured reaction product of the moisture-curable composition of any one of claims 11 to 15.